# EUROPEAN PATENT APPLICATION

(11) **EP 4 654 698 A1**
(43) Date of publication of application: **26.11.2025**
(21) Application number: 23917323.0
(22) Date of filing: 27.12.2023
(51) Int. Cl.: H04W 72/04, H04W 24/08

(54) **DELAY REPORTING METHOD AND APPARATUS, AND USER EQUIPMENT AND NETWORK-SIDE DEVICE**

(30) Priority: 19.01.2023 CN 202310056948
(71) Applicant: Datang Mobile Communications Equipment Co., Ltd., Beijing 100085 (CN)
(72) Inventor: CHEN, Li, Beijing 100085 (CN); ZHAO, Yali, Beijing 100085 (CN); FU, Jing, Beijing 100085 (CN)
(74) Representative: Studio Torta S.p.A.
(86) International application number: PCT/CN2023/142316
(87) International publication number: WO 2024/152858

(57) **Abstract**

A delay reporting method and apparatus, a terminal and a network-side device. The method comprises: obtaining configuration information transmitted by a network-side device, wherein the configuration information is used to configure a condition and/or a resource for the terminal to report a delay information report; and transmitting the delay information report of at least one data group to the network-side device according to the configuration information, wherein the delay information report includes remaining time information of the at least one data group relative to a reference time.

## Description

### CROSS-REFERENCE TO RELATED APPLICATION

This disclosure claims a priority of the Chinese patent application No. 202310056948.8 filed with the China Patent Office on January 19, 2023, with the Title "delay reporting method and apparatus, terminal and network-side device", all contents of which are incorporated by reference in this disclosure.

### TECHNICAL FIELD

The present disclosure relates to the field of wireless technologies, and in particular to a delay reporting method and apparatus, a terminal and a network-side device.

### BACKGROUND

Extended reality (eXtended Reality, XR) and cloud game (Cloud Game, CG), as two of the most important 5G media applications, have requirements of low latency, high throughput and high reliability, and requires a large amount of data to be transmitted in a short time. XR is a general term for different types of reality, referring to computer-generated environments that blend real and virtual worlds through human-device interaction, and mainly includes augmented reality (Augmented Reality, AR), mixed reality (Mixed Reality, MR) and virtual reality (Virtual Reality, VR) and other representative forms.

XR services are modeled according to data frames. For example, each data frame may correspond to one XR video frame, and one data frame may also be equivalent to a data burst (data burst). The same frame may be divided into one or more packet data unit sets (packet data unit set, PDU set), and one PDU set includes multiple PDUs. It should be noted that the frame mentioned in other parts of this disclosure refer to a time unit in a frame structure of the physical layer, and the frame mentioned here is a data unit of the service layer.

Usually for uplink transmissions, a base station determines that a UE (User Equipment, UE) has data to transmit on a corresponding logical channel or logical channel group only when it receives a first data packet and/or buffer status report (Buffer Status Report, BSR) from the UE. The base station may prioritize scheduling for high-priority logical channel data. However, with the introduction of XR services, resources can only be allocated fairly for transmissions of high-priority services with different latency requirements by using a resource scheduling method in the related art, which leads to a problem of timeouts of some data transmissions. Therefore, it is essential for the base station to obtain accurate a data transmission latency requirement for the XR service. Currently, there is no method for the base station to obtain a precise latency requirement of a data packet from the UE.

### SUMMARY

The objective of the present disclosure is to provide a delay reporting method and apparatus, a terminal and a network-side device, to solve the problem in the related art that using a conventional resource scheduling method for transmissions of high-priority services with varying latency requirements results in timeout failures for some data transmissions of XR services.

An embodiment of the present disclosure provides a delay reporting method, which is executed by a terminal. The method includes:
obtaining configuration information transmitted by a network-side device, where the configuration information is used to configure a condition and/or a resource for the terminal to report a delay information report; and
transmitting the delay information report of at least one data group to the network-side device according to the configuration information, where the delay information report includes remaining time information of the at least one data group relative to a reference time.

Optionally, in the delay information reporting method, the transmitting the delay information report of the at least one data group to the network-side device includes: transmitting the delay information report of the at least one data group to the network-side device through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, in the delay information reporting method, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, in the delay information reporting method, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, in the delay information reporting method, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, in the delay information reporting method, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, in the delay information reporting method, the transmitting the delay information report of the at least one data group to the network-side device includes:
when a first trigger condition is satisfied, transmitting the delay information report of the at least one data group to the network-side device, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, the delay reporting method further includes: when a second trigger condition is satisfied, cancelling transmission of the delay information report, where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, in the delay information reporting method, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, in the delay information reporting method, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, in the delay information reporting method, the remaining time information includes one or more of the following: a remaining time absolute value; or a remaining time urgency level value.

Optionally, in the delay information reporting method, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, in the delay information reporting method, the data group includes a packet data unit set (PDU set) or a data burst (data burst).

An embodiment of the present disclosure further provides a delay reporting method, executed by a network-side device. The method includes:
transmitting configuration information to a terminal, where the configuration information is used to configure a condition and/or a resource for the terminal to report a delay information report; and
obtaining the delay information report of at least one data group transmitted by the terminal according to the configuration information, where the delay information report includes remaining time information of the at least one data group relative to a reference time.

Optionally, the delay reporting method further includes: determining a delay range of a transmission resource configuration for the data group according to the reference time and the remaining time information; and configuring a transmission resource within the determined delay range.

Optionally, in the delay reporting method, the obtaining the delay information report of the at least one data group transmitted by the terminal includes: obtaining the delay information report of the at least one data group transmitted by the terminal through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, in the delay reporting method, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, in the delay reporting method, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, in the delay reporting method, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, in the delay reporting method, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, in the delay reporting method, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, in the delay reporting method, the obtaining the delay information report of the at least one data group transmitted by the terminal according to the configuration information includes:
when the terminal satisfies a first trigger condition, the obtaining the delay information report of the at least one data group transmitted by the terminal, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, the delay reporting method further includes:
in response to determining that the terminal satisfies a second trigger condition, cancel transmission of the delay information report; where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, in the delay reporting method, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, in the delay reporting method, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, in the delay reporting method, the remaining time information includes one or more of the following: a remaining time absolute value; or a remaining time urgency level value.

Optionally, in the delay reporting method, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, in the delay reporting method, the data group includes a packet data unit set (PDU set) or a data burst (data burst).

An embodiment of the present disclosure further provides a terminal, which includes: a memory, a transceiver and a processor. The memory is configured to store a computer program; the transceiver is configured to transmit and receive data under the control of the processor; and the processor configured to read the computer program in the memory and perform the following operations:
obtaining configuration information transmitted by a network-side device, where the configuration information is used to configure a condition and/or a resource for the terminal to report delay information; and
transmitting a delay information report of at least one data group to the network-side device according to the configuration information, where the delay information report includes remaining time information of the at least one data group relative to a reference time.

Optionally, the terminal transmitting the delay information report of the at least one data group to the network-side device includes: transmitting the delay information report of the at least one data group to the network-side device through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more of a pre-configured logical channel, a logical channel group and an identifier of the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the terminal, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the terminal, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the terminal, where in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the terminal, the transmitting, by the processor, the delay information report of the at least one data group to the network-side device includes:
when a first trigger condition is satisfied, transmitting the delay information report of the at least one data group to the network-side device, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, for the terminal, the processor is further configured to: cancel transmission of the delay information report when a second trigger condition is satisfied, where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, for the terminal, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

An embodiment of the present disclosure further provides a network-side device, including a memory, a transceiver and a processor. The memory is configured to store a computer program; the transceiver is configured to transmit and receive data under the control of the processor; and the processor configured to read the computer program in the memory and perform the following operations:
transmitting configuration information to a terminal, where the configuration information is used to configure a condition and/or a resource for the terminal to report a delay information report; and
obtaining the delay information report of at least one data group transmitted by the terminal according to the configuration information, where the delay information report includes remaining time information of the at least one data group relative to a reference time.

Optionally, for the network-side device, the processor is further configured to:
determine a delay range of a transmission resource configuration for the data group according to the reference time and the remaining time information; and
configure a transmission resource within the determined delay range.

Optionally, for the network-side device, the obtaining, by the processor, the delay information report of the at least one data group transmitted by the terminal includes: obtaining the delay information report of the at least one data group transmitted by the terminal through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the network-side device, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the network-side device, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the network-side device, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the network-side device, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

An embodiment of the present disclosure further provides a delay reporting apparatus, applied to a terminal, including:
a first obtaining module, configured to obtain configuration information transmitted by a network-side device, where the configuration information is used to configure a condition and/or a resource for the terminal to report a delay information report; and
a first transmitting module, configured to transmit the delay information report of at least one data group to the network-side device according to the configuration information, where the delay information report includes remaining time information of the at least one data group relative to a reference time.

An embodiment of the present disclosure further provides a delay reporting apparatus, applied to a network-side device, including:
a second transmitting module, configured to transmit configuration information to a terminal, where the configuration information is used to configure a condition and/or a resource for the terminal to report a delay information report; and
a second obtaining module, configured to obtain the delay information report of at least one data group transmitted by the terminal according to the configuration information, where the delay information report includes remaining time information of the at least one data group relative to a reference time.

An embodiment of the present disclosure further provides a processor-readable storage medium, where the processor-readable storage medium stores a computer program, and the computer program is configured to cause the processor to execute steps of the delay reporting method as described in any one of the above items.

The beneficial effects of the above technical solutions of the present disclosure are as follows. By adopting the delay reporting method according to the embodiments of the present disclosure, a terminal can transmit a delay information report to a network-side device according to a condition and/or a resource for transmitting delay information report configured by a network-side device through configuration information, and can report remaining time information of a data group relative to a reference time. In this way, the network-side device obtains an accurate latency requirement for the terminal to transmit the data group, and can configure a transmission resource based on the latency requirement, so as to avoid a problem of a delay of a data transmission.

### BRIEF DESCRIPTION OF THE DRAWINGS

FIG. 1 is a schematic diagram of an architecture of a wireless communication system according to an embodiment of the present disclosure;
FIG. 2 is a schematic diagram of an implementation structure of a data frame of an XR service;
FIG. 3 is a schematic flow chart of a delay reporting method according to an embodiment of the present disclosure;
FIG. 4 is a schematic flow chart of a first implementation mode of a method according to an embodiment of the present disclosure;
FIG. 5 is a schematic diagram showing the principle of determining a delay range of a data group in an embodiment of the present disclosure;
FIG. 6 is a flow chart of a second implementation mode of a method according to an embodiment of the present disclosure;
FIG. 7 shows a first format for reporting a delay information report in the second implementation mode;
FIG. 8 shows a second format for reporting a delay information report in the second implementation mode;
FIG. 9 shows a third format for reporting a delay information report in the second implementation mode;
FIG. 10 is a flow chart of a third implementation mode of a method according to the embodiment of the present disclosure;
FIG. 11 shows a first format for reporting a delay information report in the third implementation mode;
FIG. 12 shows a second format for reporting a delay information report in the third implementation mode;
FIG. 13 is a schematic flow chart of a delay reporting method according to another embodiment of the present disclosure;
FIG. 14 is a schematic structural diagram of a terminal according to an embodiment of the present disclosure;
FIG. 15 is a schematic structural diagram of a network-side device according to an embodiment of the present disclosure;
FIG. 16 is a schematic structural diagram of a delay reporting apparatus according to an embodiment of the present disclosure; and
FIG. 17 is a schematic structural diagram of a delay reporting apparatus according to another embodiment of the present disclosure.

### DETAILED DESCRIPTION

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

The technical solutions according to embodiments of the present disclosure may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (5GS).

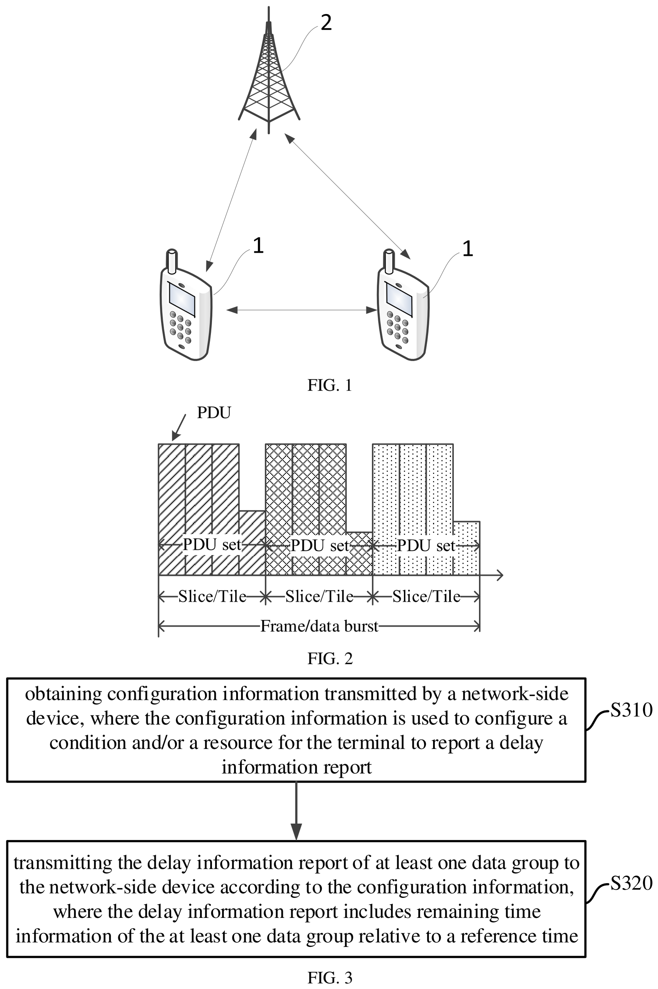

FIG. 1 shows a block diagram of a wireless communication system to which embodiments of the present disclosure are applicable. The wireless communication system includes a terminal 1 and a network device 2.

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The contents involved in the solutions provided by the embodiments of the present disclosure are introduced below.

XR services are modeled according to data frames. For example, each data frame may correspond to one XR video frame, and one data frame may also be equivalent to a data burst (data burst). One frame may be divided into one or more PDU sets, and one PDU set includes multiple PDUs, as shown in FIG. 2.

Some characteristics of XR services are as follows.

There are several video frames rates, including 15/30/60/90/120 frames per second (frames per second, fps), which correspond to durations of 66.6/33.3/16.66/8.87ms.
Frame arrival time exhibits unpredictable jitter.
Latency requirement is 10 ms or in a range of 7 ms to 15 ms.
Bit rate: 10 Mbps to 200 Mbps.
QoS (Quality of Service, QoS) parameters of a PDU set include at least:
PDU set error rate (PDU Set Error Rate, PSER);
PDU set delay budget (PDU Set Delay Budget, PSDB); and
PDU Set Integrated Indication (PDU Set Integrated Indication, PSII) used to indicate whether the application layer needs to use all PDUs of the PDU set.

Usually, for uplink transmission, a base station determines that the UE has data on a corresponding logical channel or logical channel group to be transmitted only when it receives a first data packet and/or BSR of the UE. For data on a high-priority logical channel, the base station will give priority to scheduling. This is a relatively vague control method. For example, the base station receives BSR reports from UE1 and UE2. A priority of the logical channel group (LCG) reported in the BSR of UE1 is 1 (high priority), and a latency requirement of corresponding service data is 7ms; a priority of the LCG reported in the BSR of UE2 is 2 (low priority), and a latency requirement of corresponding service data is 20ms. Based on the principle of prioritizing scheduling for a high-priority logical channel, the base station prioritizes scheduling UE1, and UE1 quickly completes a transmission of high-priority service data in the buffer. This resource scheduling method can be applied before the introduction of XR in the related technologies. However, for the XR services, when the base station determines that two or more UEs have high-priority service data to be transmitted, for example, when two UEs have high-priority service data with a latency requirement within 7 ms to 10 ms to be transmitted, the base station can only allocate resources fairly, which may cause some data transmission to timeout.

To solve the technical problem, an embodiment of the present disclosure provides a delay reporting method, in which a terminal can transmit a delay information report to a network-side device according to a condition and/or a resource for transmitting delay information report configured by a network-side device through configuration information, and can report remaining time information of a data group relative to a reference time. In this way, the network-side device obtains an accurate latency requirement for the terminal to transmit the data group, and can configure a transmission resource based on the latency requirement, so as to avoid a problem of a delay of a data transmission.

In an implementation, an embodiment of the present disclosure provides a delay reporting method, executed by a terminal. As shown in FIG. 3, and the method includes:
step S310: obtaining configuration information transmitted by a network-side device, where the configuration information is used to configure a condition and/or a resource for the terminal to report a delay information report; and
step S320: transmitting the delay information report of at least one data group to the network-side device according to the configuration information, where the delay information report includes remaining time information of the at least one data group relative to a reference time.

By adopting the delay reporting method according to the embodiment, the terminal determines latency requirement of the at least one data group based on the reference time, transmits the delay information report to the network-side device according to the condition and/or the resource for reporting the delay information report configured by the network-side device, and reports the remaining time information of the at least one data group relative to the reference time, so as to report the latency requirement of the data group.

In the embodiment of the present disclosure, the remaining time information is information indicating a maximum delay budget of the data group relative to the reference time. That is, a PDU set delay budget (PSDB) in PDU set QoS parameters of the service that the terminal needs to send is used as a basis, in the embodiment of the present disclosure, a remaining delay budget for the data group to be transmitted relative to the reference time is determined, according to the PDU set delay budget (PSDB) of the service to be transmitted, by using the reference time as a benchmark. That is, if the time indicated by the remaining time information exceeds, the data in the data group exceeds a maximum permitted time. Optionally, the maximum permitted time is the PSDB.

In the embodiments of the present disclosure, optionally, the delay reporting method may be applied to, but not limited to, only XR services.

In an implementation, optionally, the remaining time information includes one or more of the following: a remaining time absolute value; or an urgency level value of the remaining time.

The absolute value of the remaining time is an absolute value of a time difference between a maximum allowed transmission time of the data group and the reference time, and the unit is ms or slot (slot). The urgency level value of the remaining time is used to indicate an urgency level of the maximum allowed transmission time of the data group relative to the reference time. Specifically, the urgency level value may be pre-divided into multiple tiers. A smaller absolute time difference between the maximum allowed time and the reference time corresponds to a higher urgency level, while a larger absolute time difference between the maximum allowed time and the reference time corresponds to a lower urgency level. A corresponding relationship between the urgency level value and the absolute value may be configured by the network-side device or defined by a protocol, which is not limited in the method according to the embodiments of the present disclosure.

Optionally, in the embodiments of the present disclosure, the data group mentioned includes a packet data unit set (PDU set) or a data burst (data burst).

In an implementation, in step S310, the terminal obtains the configuration information transmitted by the network-side device, and the obtained configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, the condition for reporting the delay information report configured by the configuration information includes: a first trigger condition used for triggering transmission of the delay information report; and/or a second trigger condition used for canceling the delay information report.

The resource for reporting the delay information report configured by the configuration information include one or more of the following:
one or more of an identifier of a DRB, an identifier of an RLC and an identifier of an LCH configured by the network-side device for permitting transmission of the delay information report;
the reference time;
an index of a configured grant (CG) resource for transmitting the delay information report.

In the embodiment of the present disclosure, optionally, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

It should be noted that the transmission resource mentioned above is one of a subframe, a slot or a sub-slot.

In addition, the reference time includes the time corresponding to the starting position of the transmission resource for transmitting the delay information report, and/or the time corresponding to the ending position of the transmission resource for transmitting the delay information report. In the case of retransmission, the transmission resource for transmitting the delay information report shall be based on a time of an initial transmission.

In the embodiment of the present disclosure, in step S320, when the delay information report of the at least one data group is transmitted to the network-side device, the transmitted delay information report further includes one or more of the following: an identifier of the data group; an identifier of a logical channel or a logical channel group corresponding to the delay information report; or first indication information used for indicating that the delay information report corresponds to uplink data transmitted simultaneously or corresponds to a buffer status report (BSR) transmitted simultaneously.

In an implementation, the delay information report transmitted by the terminal to the network-side device directly indicates a data group corresponding to the reported delay information report by including the identifier of the data group. That is, the delay information report indicates remaining time information relative to the reference time for transmitting the data group associated with the identifier.

The reported delay information report indicates the corresponding logical channel or logical channel group by carrying the identifier of the logical channel or the logical channel group. That is, the delay information report indicates the remaining time information relative to the reference time for transmitting the data group on the logical channel or the logical channel group associated with the identifier.

In the embodiment of the present disclosure, optionally, in transmitting the delay information report of the at least one data group to the network-side device according to the configuration information in step S320, one or more of the following signalings are used to transmit the delay information report to the network-side device:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

In one implementation of the present disclosure, optionally, the delay information report transmitted by the terminal to the network-side device is transmitted simultaneously with the uplink data or the BSR.

When the delay information report is transmitted simultaneously with the uplink data or the BSR, the delay information report may be reported through a physical layer signaling transmitted simultaneously with the uplink data or the BSR. Optionally, the physical layer signaling is an uplink physical layer signaling included in the PUSCH. Specifically, the physical layer signaling may be transmitted together with an uplink MAC PDU set (including the uplink data and/or the BSR) by means of puncturing or rate matching.

In an implementation, the delay information report may not be transmitted simultaneously with the uplink data or the BSR, but may be transmitted through a separate uplink physical layer signaling, for example, through an uplink physical layer signaling transmitted on the PUCCH. In the implementation, the reference time may not be determined through a data transmission moment, and the transmitted delay information report corresponds to one or more pre-configured identifiers of the logical channel, the logical channel group and the data group, that is, the network-side device pre-configures the logical channel, the logical channel group or the PDU set corresponding to the delay information report.

In an implementation, the delay information report is transmitted through an uplink physical layer signaling transmitted on a specified uplink configured grant resource (Configured Grant, CG). The implementation leverages the periodical nature of XR services, and the base station allocates periodical uplink CG resources to the UE. Upon receiving of a physical layer uplink signaling on a certain CG resource, the base station can immediately associate the delay information report with a specific XR service or logical channel, even if the MAC PDU fails to decode, which is the fastest way to obtain the latency requirement.

In an implementation, the delay information report is reported through an extended BSR MAC CE signaling, and the extended BSR MAC CE is used to simultaneously report the BSR and the extended BSR of the delay information report. Specifically, in the implementation, when the BSR reports buffer occupancy of an LCG or an LCH, the delay information report corresponding to the specified logical channel or logical channel group is reported at the same time; or, when the BSR reports buffer occupancy of a PDU set, the delay information report corresponding to the specified PDU set is reported at the same time.

In the embodiment of the present disclosure, optionally, the extended BSR MAC CE signaling includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

The remaining time information includes a remaining time absolute value and/or a remaining time urgency level value.

In an implementation, the delay information report is transmitted through a MAC CE signaling dedicated for transmitting a delay information report, that is, the delay information report is transmitted through a separate MAC CE, and the MAC CE may be referred to as a delay information report MAC CE.

Optionally, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

In the delay reporting method according to the embodiment of the present disclosure, optionally, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

In an implementation, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

In an implementation, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

In the embodiment of the present disclosure, a data group includes a PDU set or a data burst. The PDU set or the data burst corresponding to the delay information report may be determined according to a transmission mode of the delay information report and/or information content included in the delay information report.

On the basis of the above, in the case where the data group includes a PDU set, the PDU set indicated in the delay information report may be determined according to one or more of the following manners.

When the delay information report and the uplink data are transmitted simultaneously, such as through an uplink physical layer signaling included in a physical uplink shared channel (PUSCH) transmitted simultaneously with the uplink data, the PDU set corresponding to the remaining time information in the delay information report may be a PDU set in a logical channel having the highest logical channel priority in the uplink data; or, it may be a PDU set in a logical channel in the uplink data configured by the network-side device to allow the delay information report to be transmitted.

When the delay information report and the BSR are transmitted simultaneously, such as the delay information report and the BSR may be transmitted through a BSR MAC CE, or through a separate MAC CE encapsulated in the same MAC PDU as the BSR MAC CE, the PDU set corresponding to the remaining time information in the delay information report may be a PDU set of a logical channel in a highest priority logical channel group (LCG) in the BSR; or it may be a PDU set in a target logical channel group and/or a logical channel group including the target logical channel in the BSR. The target logical channel group is a logical channel group pre-configured by the network-side device to allow transmission of the delay information report; the target logical channel is a logical channel pre-configured by the network-side device to allow transmission of the delay information report. Optionally, in the case where the BSR report is for a PDU set, the PDU set corresponding to the remaining time information in the delay information report is a PDU set that reports the BSR.

When the delay information report includes an identifier of the data group; and/or an identifier of a logical channel or a logical channel group corresponding to the delay information report, that is, the delay information report explicitly indicates an identifier of a PDU set, and/or explicitly indicates an identifier of a logical channel or a logical channel group, the PDU set corresponding to the remaining time information in the delay information report may be directly determined based on the delay information report. Optionally, one or more PDU sets may be reported through the delay information report, or remaining time information of one or more logical channels or logical channel groups may be reported.

In the case where the data group includes a data burst, the data burst indicated in the delay information report may be determined according to one or more of the following manners.

when the delay information report is transmitted simultaneously with the uplink data, such as through an uplink physical layer signaling included in a physical uplink shared channel (PUSCH) transmitted simultaneously with the uplink data, the data burst corresponding to the remaining time information in the delay information report may be a data burst in a logical channel having the highest logical channel priority in the uplink data; or, it may be a data burst in a logical channel configured by the network-side device in the uplink data to allow transmission of the delay information report.

When the delay information report is transmitted simultaneously with the BSR, the data burst corresponding to the remaining time information in the delay information report may be a data burst in a logical channel in a logical channel group (LCG) having the highest priority indicated in the BSR; or may be a data burst in a target logical channel group and/or a logical channel group including a target logical channel in the BSR. The target logical channel group is a logical channel group pre-configured by the network-side device to allow the delay information report to be transmitted; and the target logical channel is a logical channel pre-configured by the network-side device to allow the delay information report to be transmitted. Optionally, in the case where the BSR report is for a data burst, the remaining time information in the delay information report directly corresponds to the same data burst referenced in the BSR.

When the delay information report includes an identifier of a data group; and/or an identifier of a logical channel or a logical channel group corresponding to the delay information report, that is, the delay information report explicitly indicates an identifier of the data burst, and/or explicitly indicates the identifier of the logical channel or the logical channel group, the data burst corresponding to the remaining time information in the delay information report may be directly determined according to the delay information report. Optionally, one or more data bursts may be reported through the delay information report, or remaining time information of one or more logical channels or one or more logical channel groups may be reported.

In the embodiment of the present disclosure, optionally, in step S320, the transmitting the delay information report to the network-side device includes: when a first trigger condition is satisfied, transmitting the delay information report to the network-side device, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, the first trigger condition may be configured by the network-side device.

Optionally, the method further includes: when a second trigger condition is satisfied, cancelling transmission of the delay information report, where the second trigger condition includes one or more of the following: the terminal having transmitted all data groups in a current transmission resource; the terminal having completed transmission of one delay information report; or current buffered data of the terminal not including data in the data group corresponding to the delay information report. For example, when the PDCP discard timer (discard timer) expires, or when the delay information report corresponding to the data group has been successfully transmitted, or when the data group has been successfully transmitted, the UE may actively discard the PDU set or the data burst in the buffer. After discarding the PDU set or the data burst in the buffer, the data of the data group corresponding to the delay information report does not exist in the current buffered data of the terminal, the delay information report may be canceled.

With the implementation, when determining that the above-mentioned second trigger condition is satisfied, the terminal cancels the transmission of the delay information report to the network-side device. Specifically, the terminal aborts transmitting an already-triggered delay information report, or to cancel monitoring of a trigger condition for transmitting the delay information report corresponding to a data group, so as to avoid duplicate reporting.

Optionally, the second trigger condition may be configured by the network-side device.

The delay reporting method according to the embodiment of the present disclosure is described in detail below in conjunction with specific implementation manners.

### First Implementation Manner

In the first implementation manner, the terminal transmits the delay information report to the network-side device through an uplink physical layer signaling transmitted on an uplink configured grant resource (CG) configured by the network-side device. The uplink physical layer signaling for transmitting the delay information report may be transmitted together with the uplink data and/or the BSR.

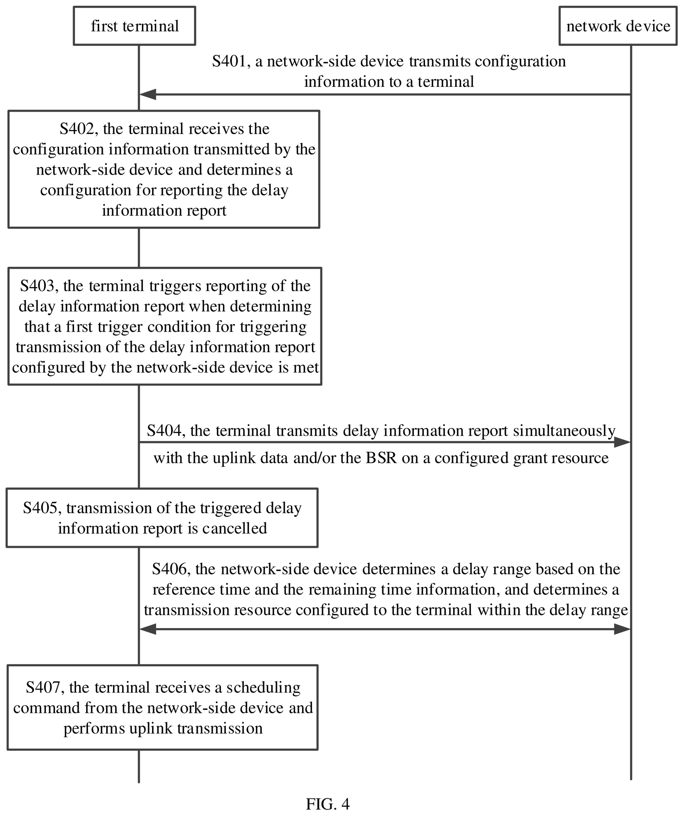

As shown in FIG. 4, the implementation process includes the following steps.

In step S401, a network-side device transmits configuration information to a terminal, where the configuration information includes one or more of the following: one or more of an identifier of a data radio bearer (DRB), an identifier of a radio link control (RLC) and an identifier of a logical channel (LCH) configured by the network-side device for permitting transmission of the delay information report; or an index of a configured grant (CG) resource for transmitting the delay information report.

Optionally, the configuration information may also include one or more of the following: the reference time; a first trigger condition used for triggering transmission of the delay information report; or a second trigger condition used for canceling transmission of the delay information report.

In step S402, the terminal receives the configuration information transmitted by the network-side device and determines a configuration for reporting the delay information report.

In step S403, the terminal triggers reporting of the delay information report when determining that a first trigger condition for triggering transmission of the delay information report configured by the network-side device is met.

For example, the transmission of the delay information report is triggered, when data from a designated DRB or logical channel arrives in the buffer of the UE, and the UE is about to transmit uplink data of the DRB or the logical channel on a CG resource, or is about to transmit a BSR including a buffer size of the DRB or the logical channel.

In step S404, the terminal transmits the delay information report simultaneously with the uplink data and/or the BSR on a configured grant resource.

For example, the terminal transmits the delay information simultaneously with the uplink data and/or the BSR on a CG resource based on a CG configuration (the CG configuration corresponding to a CG index) indicated by the configuration information of the network-side device.

In step S405, transmission of the triggered delay information report is cancelled.

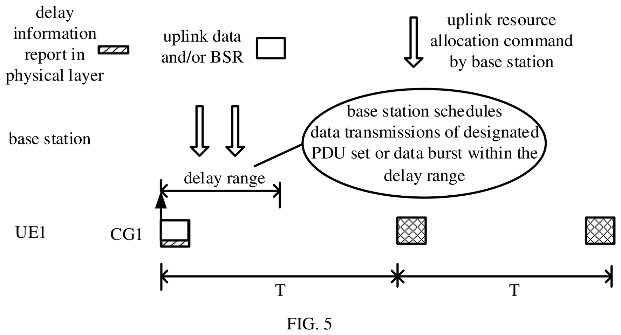

In step S406, the network-side device receives the delay information report transmitted by the terminal, determines the reference time and the remaining time information according to the delay information report transmitted by the terminal, determines a delay range of a PDU set or a data burst in a terminal buffer corresponding to the delay information report, and allocates sufficient resources to the UE within the delay range to transmit data of the PDU set or the data burst. That is, a transmission resource of the terminal is configured within the determined delay range, as shown in FIG. 5.

Optionally, the network-side device determines a data volume of the PDU set or the data burst based on the BSR reported by the terminal. Even if an initial transmission of the uplink data and/or the BSR transmitted simultaneously with the delay information report in the physical layer is not received successfully, the base station may still determine which data of a DRB/logical channel needs to be transmitted within a reported delay budget based on a correspondence between a CG index and the DRB/logical channel, and the delay information report in the physical layer. The base station may prioritize uplink resource allocation for UEs with smaller delay budgets.

In step S407, the terminal receives a scheduling command from the network-side device and performs uplink transmission.

With this implementation, the network-side device will allocate sufficient resources within the delay range determined according to the remaining time information to enable the terminal to complete data transmission of the PDU set or the data burst. In this way, the network-side device can configure a transmission resource based on the latency requirements, and the terminal performs uplink transmission according to the transmission resource configuration, avoiding the problem of a delay of the data transmission.

### Second Implementation Manner

In the second implementation manner, a terminal reports delay information to a network-side device by an extending BSR MAC CE signaling.

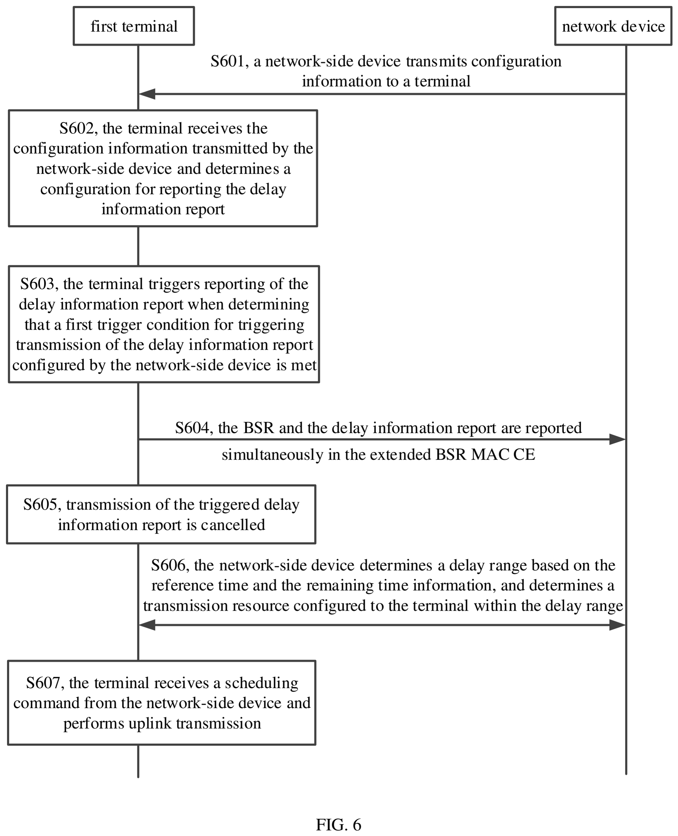

As shown in FIG. 6, the implementation process includes the following steps.

In step S601, a network-side device transmits configuration information to a terminal, where the configuration information includes: one or more of an identifier of a data radio bearer (DRB), an identifier of a radio link control (RLC) and an identifier of a logical channel (LCH) configured by the network-side device for permitting transmission of the delay information report.

Optionally, the configuration information may also include one or more of the following: the reference time; a first trigger condition used for triggering transmission of the delay information report; or a second trigger condition used for canceling transmission of the delay information report.

In step S602, the terminal receives configuration information transmitted by the network-side device, and determines a configuration of transmitting delay information report.

In step S603, the terminal triggers the transmitting of the delay information report when determining that the first trigger condition used for triggering transmitting of the delay information report configured by the network-side device is satisfied.

For example, the terminal triggers the transmitting of the delay information report when the terminal needs to report a BSR including data buffer information of a designated DRB or a designated logical channel.

In step S604, the BSR and the delay information report are reported simultaneously in the extended BSR MAC CE.

The extended BSR MAC CE signaling includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

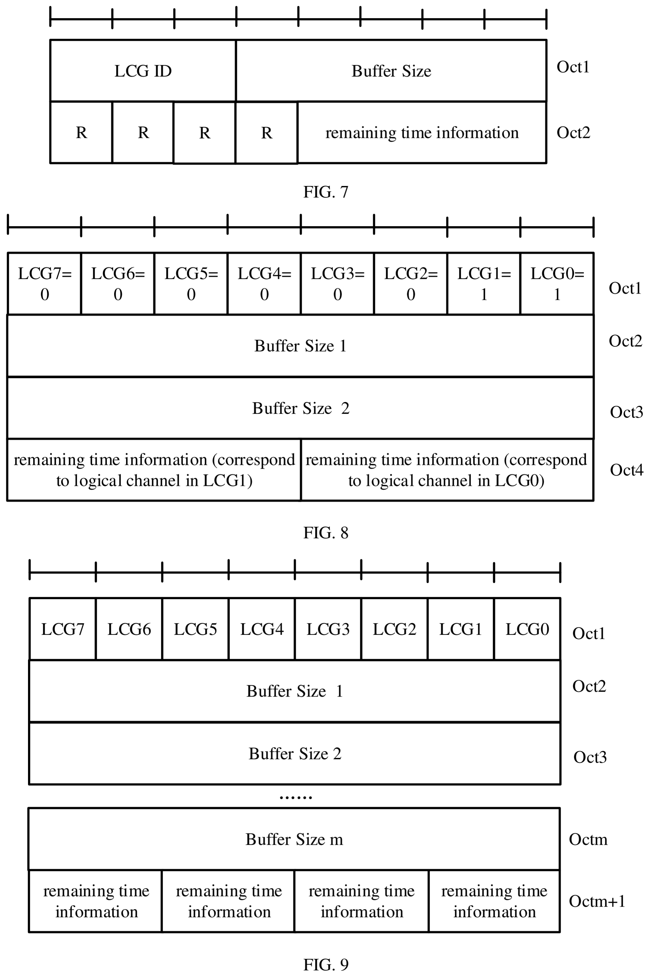

For example, a first format of the extended BSR MAC CE signaling may be as shown in FIG. 7.

The extended BSR MAC CE signaling shown in the first format may be extended based on 5-bit buffer size short BSR, and may include an indicated logical channel group for reporting a delay information report; a buffer size of the indicated logical channel group and remaining time information corresponding to the indicated logical channel group. The index and/or the bitmap of the logical channel group for reporting the delay information report is indicated by LCG ID, and the remaining time information of the logical channel group is indicated by a "remaining time information" indication field.

Optionally, in the first format, the remaining time information is an absolute value of the remaining time relative to the reference time, in units of ms or slot.

In addition, a second format of the extended BSR MAC CE signaling may be as shown in FIG. 8.

The extended BSR MAC CE signaling shown in the second format may be extended based on the 8-bit buffer size long BSR, including an indicated logical channel group for reporting a delay information report; a buffer size of the indicated logical channel group and remaining time information corresponding to the indicated logical channel group. In the second format, a value of LCGi is 1, indicating that the transmitted BSR MAC CE signaling includes a corresponding buffer size. In the case where the value of the LCGi is 1, and the LCG includes a logical channel that can report the remaining time information, the extended BSR MAC CE signaling includes a corresponding "remaining time information" indication field for indicating the remaining time information, where the remaining time information is a relative value relative to the reference time, in units of ms or slot.

For example, in the format shown in FIG. 8, in the extended BSR MAC CE signaling, values of LCG1 and LCG0 are 1, the extended BSR MAC CE signaling includes buffer sizes corresponding to LCG1 and LCGO, and includes the "remaining time information" indication fields corresponding to logical channels in LCG1 and LCGO, which are used to indicate remaining time information of data groups corresponding to the logical channels in LCG1 and LCGO, respectively.

In another implementation manner, a third format of the extended BSR MAC CE signaling may be as shown in FIG. 9.

The extended BSR MAC CE signaling shown in the third format may be extended based on 8-bit buffer size long BSR. Compared with the second format, the remaining time information indicated by the extended BSR MAC CE signaling in the third format is the remaining time urgency level value.

The extended BSR MAC CE signaling of the third format includes an indicated logical channel group for reporting a delay information report; a buffer size of the indicated logical channel group and remaining time information corresponding to the indicated logical channel group. In the third format, a value of LCGi is 1, indicating that a transmitted BSR MAC CE signaling includes a corresponding buffer size. a corresponding "remaining time information" indication field is added after the corresponding buffer size field, to indicate the remaining time information, where the remaining time information is the remaining time urgency level value.

For example, in the example of the third format, the number of bits of the "remaining time information" indication field is 2 bits, which may indicate 4 different levels of remaining time urgency level values. A correspondence between remaining time urgency level values and specific remaining time values may be defined in a protocol or configured by an RRC signaling. In a case that LCGi=1, and the LCG includes a logical channel that can report a delay information report, the "remaining time information" indication field is reported. Optionally, the reported "remaining time information" indication fields corresponding to different LCGs are arranged in ascending order according to serial numbers of the corresponding LCGs (i value of LCGi). For example, in FIG. 9, if LCGO=1 and LCG1=1, the lower 2 bits of remaining time urgency level values in the last row (i.e., the lower 1st and 2nd bits from right to left) corresponds to LCGO, and the lower 3rd and 4th bits of the remaining time urgency level values corresponds to LCG1.

It should be noted that in the above example of the extended BSR MAC CE, if the format of the BSR indication part changes, or the number of bits occupied by the delay budget value, or the number of bits occupied by the time urgency information is different from that in the above example, the MAC CE format needs to be adjusted accordingly, but the overall idea is the same.

In addition, the above example only shows the MAC CE part, and does not show the MAC subheader part. It should be noted that a new dedicated logical channel identity (LCID) needs to be used in the corresponding MAC subheader to indicate the extended BSR MAC CE, which is not described in detail here.

In step S605, transmission of the triggered delay information report is cancelled.

In step S606, the network-side device receives the delay information report transmitted by the terminal, determines the reference time and the remaining time information according to the delay information report transmitted by the terminal, determines a delay range of a PDU set or a data burst in a terminal buffer corresponding to the delay information report, and allocates sufficient resources to the UE within the delay range to transmit data of the PDU set or the data burst. That is, a transmission resource of the terminal is configured within the determined delay range.

Optionally, the network-side device determines a data amount of the PDU set or the data burst based on the BSR reported by the terminal.

In step S607, the terminal receives a scheduling command from the network-side device and performs uplink transmission.

### Third Implementation Manner

In the third implementation manner, the terminal transmits the delay information report to the network-side device through an MAC CE signaling transmitted simultaneously with the BSR.

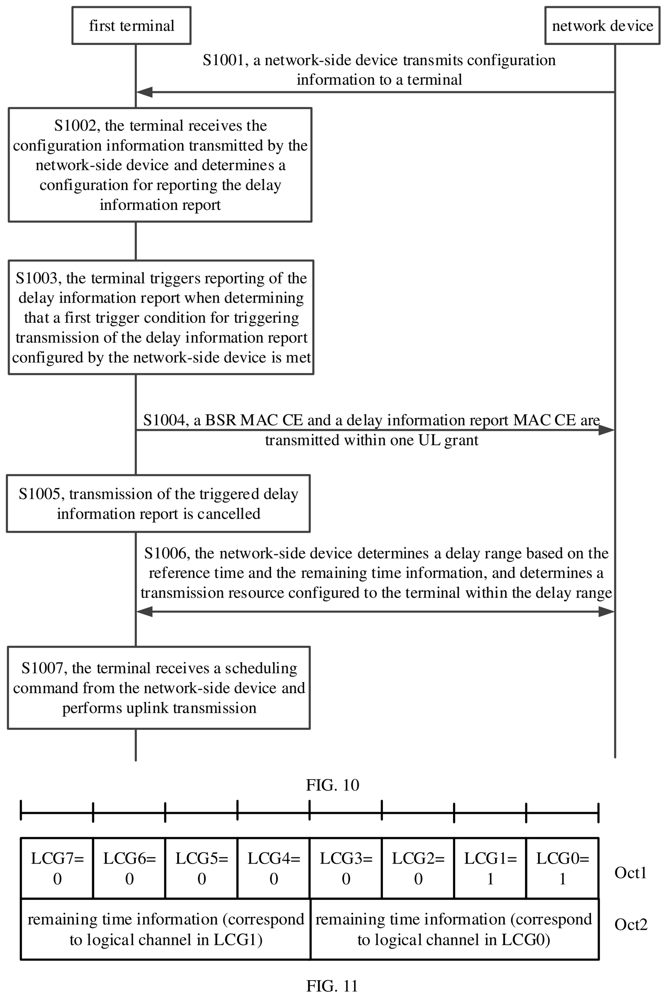

As shown in FIG. 10, the implementation process includes the following steps.

In step S1001, a network-side device transmits configuration information to a terminal, where the configuration information includes: one or more of an identifier of a data radio bearer (DRB), an identifier of a radio link control (RLC) and an identifier of a logical channel (LCH) configured by the network-side device for permitting transmission of the delay information report.

Optionally, the configuration information may also include one or more of the following: the reference time; a first trigger condition used for triggering transmission of the delay information report; or a second trigger condition used for canceling transmission of the delay information report.

Optionally, the content of the configuration information transmitted by the network-side device to the terminal may be determined in a manner specified by the protocol.

In step S1002, the terminal receives configuration information transmitted by the network-side device, and determines a configuration of transmitting delay information report.

In step S1003, the terminal triggers the transmitting of the delay information report when determining that the first trigger condition used for triggering transmitting of the delay information report configured by the network-side device is satisfied.

For example, the terminal triggers the transmitting of the delay information report when the terminal needs to report a BSR including data buffer information of a designated DRB or a designated logical channel.

In step S1004, a BSR MAC CE and a delay information report MAC CE are transmitted within the same uplink grant-free scheduling (UL grant). In other words, a MAC CE signaling for transmitting a BSR and a MAC CE signaling for transmitting a delay information report are transmitted at the same time.

The medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

For example, the first format of the MAC CE signaling used for transmitting the delay information report may be as shown in FIG. 11.

The medium access control control element (MAC CE) signaling for transmitting a delay information report shown in first format is indicated by LCGi through value 1, indicating that the transmitted medium access control control element (MAC CE) signaling for transmitting the delay information report includes a "remaining time information" indication field corresponding to the LCG, which is used to indicate remaining time information, where the remaining time information is a relative value relative to the reference time, in units of ms or slot.

For example, in FIG. 11, both values of LCG1 and LCG0 are 1, indicating that the medium access control control element (MAC CE) signaling used for transmitting the delay information report includes a corresponding "remaining time information" indication field. If the number of LCGs reporting the remaining time information is an odd number, the upper 4 bits in the last row (i.e., the first 4 bits from left to right) are reserved bits R.

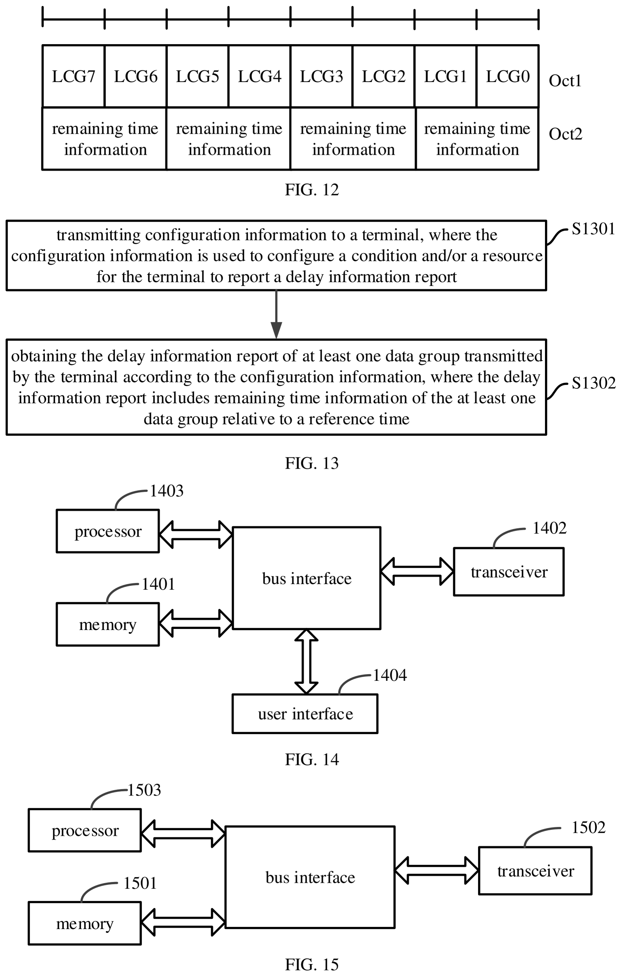

In another implementation manner, the second format of the MAC CE signaling used for transmitting the delay information report may be as shown in FIG. 12.

The medium access control (MAC) control unit (CE) signaling for transmitting the delay information report shown in the second format is indicated by LCGi as 1, indicating that the transmitted medium access control (MAC) control unit (CE) signaling for transmitting the delay information report includes a "remaining time information" indication field corresponding to the LCG, which is used to indicate remaining time information. Compared with the first format, the remaining time information indicated by the extended BSR MAC CE signaling of the second format is the remaining time urgency level value.

For example, the number of bits of the "remaining time information" indication field is 2 bits, which may indicate 4 different levels of remaining time urgency level values. A correspondence between remaining time urgency level values and specific remaining time values may be defined in a protocol or configured by an RRC signaling. In a case that LCGi=1, the "remaining time information" indication field is reported. Optionally, the reported "remaining time information" indication fields corresponding to different LCGs are arranged in order from small to large according to serial numbers of corresponding LCGs (i value of LCGi), corresponding from low to high.

For example, in FIG. 12, if LCGO=1 and LCG1=1, the time urgency information of the least significant 2 bits in the second row (i.e., the 1st and 2nd bits from right to left) corresponds to LCGO, and the time urgency information of the least significant 3rd and 4th bits corresponds to LCG1.

It should be noted that the above medium access control control element (MAC CE) signaling for transmitting delay information reports is only as an example and is not limited to this. For example, the number of bits occupied by the "remaining time information" indication field may not be limited to the above example, and the corresponding MAC CE format may be adjusted accordingly. Various implementations are not enumerated here separately.

In addition, the above example only shows the MAC CE part, and does not show the MAC subheader part. It should be noted that the corresponding MAC subheader needs to use a new dedicated LCID to indicate the medium access control control element (MAC CE) signaling for transmitting the delay information report, which is not explained in detail here.

In step S 1005, transmission of the triggered delay information report is cancelled.

In step S1006, the network-side device receives the delay information report transmitted by the terminal, determines the reference time and the remaining time information according to the delay information report transmitted by the terminal, determines a delay range of a PDU set or a data burst in a terminal buffer corresponding to the delay information report, and allocates sufficient resources to the UE within the delay range to transmit data of the PDU set or the data burst. That is, a transmission resource of the terminal is configured within the determined delay range.

Optionally, the network-side device determines a data volume of a PDU set or a data burst based on the BSR reported by the terminal.

In step S1007, the terminal receives a scheduling command from the network-side device and performs uplink transmission.

By adopting the method according to the embodiments of the present disclosure, a terminal can effectively report remaining time information corresponding to a PDU set or a data burst, so that a network-side device can accurately schedule uplink data transmission and improve data transmission quality.

In another aspect, an embodiment of the present disclosure further provides a delay reporting method, which is executed by a network-side device. As shown in FIG. 13, the method includes:
step S1301, transmitting configuration information to a terminal, where the configuration information is used to configure a condition and/or a resource for the terminal to report a delay information report; and
step S1302, obtaining the delay information report of at least one data group transmitted by the terminal according to the configuration information, where the delay information report includes remaining time information of the at least one data group relative to a reference time.

By adopting the delay reporting method according to the embodiment of the present disclosure, a terminal can transmit a delay information report to a network-side device according to a condition and/or a resource for transmitting delay information report configured by a network-side device through configuration information, and can report remaining time information of a data group relative to a reference time. In this way, the network-side device obtains an accurate latency requirement for the terminal to transmit the data group, and can configure a transmission resource based on the latency requirement, so as to avoid a problem of a delay of a data transmission.

Optionally, the delay reporting method further includes:
determining a delay range of a transmission resource configuration for the data group according to the reference time and the remaining time information; and
configuring a transmission resource within the determined delay range.

Optionally, in the delay reporting method, the obtaining the delay information report of the at least one data group transmitted by the terminal includes: obtaining the delay information report of the at least one data group transmitted by the terminal through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, in the delay reporting method, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, in the delay reporting method, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, in the delay reporting method, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, in the delay reporting method, the obtaining the delay information report of the at least one data group transmitted by the terminal according to the configuration information includes:
when the terminal satisfies a first trigger condition, the obtaining the delay information report of the at least one data group transmitted by the terminal, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, the delay reporting method further includes:
in response to determining that the terminal satisfies a second trigger condition, cancelling transmission of the delay information report; where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, in the delay reporting method, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, in the delay reporting method, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, in the delay reporting method, the remaining time information includes one or more of the following: a remaining time absolute value; or a remaining time urgency level value.

Optionally, in the delay reporting method, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, in the delay reporting method, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, in the delay reporting method, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, in the delay reporting method, the data group includes a packet data unit set (PDU set) or a data burst (data burst).

The present disclosure embodiment further provides a terminal, as shown in FIG. 14, including a memory 1401, a transceiver 1402 and a processor 1403. The memory 1401 is configured to store a computer program; the transceiver 1402 is configured to transmit and receive data under the control of the processor 1403; the processor 1403 is configured to read the computer program in the memory 1401 to perform the following operations:
obtaining configuration information transmitted by a network-side device, where the configuration information is used to configure a condition and/or a resource for the terminal to report delay information; and
transmitting a delay information report of at least one data group to the network-side device according to the configuration information, where the delay information report includes remaining time information of the at least one data group relative to a reference time.

Optionally, for the terminal, the processor 1403 transmitting the delay information report of the at least one data group to the network-side device includes: transmitting the delay information report of the at least one data group to the network-side device through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more of a pre-configured logical channel, a logical channel group and an identifier of the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the terminal, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the terminal, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the terminal, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the terminal, the processor 1403 transmitting the delay information report of the at least one data group to the network-side device includes: when a first trigger condition is satisfied, transmitting the delay information report of the at least one data group to the network-side device, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, for the terminal, the processor 1403 is further configured to: cancel transmission of the delay information report when a second trigger condition is satisfied, where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, for the terminal, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, for the terminal, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, for the terminal, the remaining time information includes one or more of the following: a remaining time absolute value; or a remaining time urgency level value.

Optionally, for the terminal, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, for the terminal, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, for the terminal, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, for the terminal, the data group includes a packet data unit set (PDU set) or a data burst (data burst).

In FIG. 14, the bus architecture may include any number of interconnected buses and bridges. Specifically, various circuits of one or more processors represented by the processor 1403 and a memory represented by the memory 1401 are linked together. The bus architecture may also link various other circuits such as peripheral devices, voltage regulators, power management circuits, etc., which are well-known in the art, and therefore, no further descriptions are provided herein. The bus interface provides an interface. The transceiver 1402 may be a plurality of elements, that is, include a transmitter and a receiver, and provide a unit for communicating with various other devices on a transmission medium. For different user equipment, the user interface 1404 may also be an interface capable of externally or internally connecting to required equipment. The connected equipment includes but not limited to a keypad, a display, a speaker, a microphone, a joystick, and the like.

The processor 1403 is responsible for managing the bus architecture and general processing, and the memory 1401 may store data used by the processor 1403 when performing operations.

Optionally, the processor 1403 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor calls the computer program stored in the memory to execute any of the methods provided by the embodiments of the present disclosure according to the obtained executable instructions. The processor and the memory may also be arranged physically separately.

An embodiment of the present disclosure further provides a network-side device, as shown in FIG. 15, including a memory 1501, a transceiver 1502, and a processor 1503. The memory 1501 is configured to store a computer program; the transceiver 1502 is configured to transmit and receive data under the control of the processor; the processor 1503 is configured to read the computer program in the memory to perform the following operations:
transmitting configuration information to a terminal, where the configuration information is used to configure a condition and/or a resource for the terminal to report a delay information report; and
obtaining the delay information report of at least one data group transmitted by the terminal according to the configuration information, where the delay information report includes remaining time information of the at least one data group relative to a reference time.

Optionally, for the network-side device, the processor 1503 is further configured to:
determine a delay range of a transmission resource configuration for the data group according to the reference time and the remaining time information; and
configure a transmission resource within the determined delay range.

Optionally, for the network-side device, the obtaining, by the processor 1503, the delay information report of the at least one data group transmitted by the terminal includes: obtaining the delay information report of the at least one data group transmitted by the terminal through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the network-side device, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the network-side device, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the network-side device, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the network-side device, the processor 1503 obtaining the delay information report of the at least one data group transmitted by the terminal according to the configuration information includes:
when the terminal satisfies a first trigger condition, the obtaining the delay information report of the at least one data group transmitted by the terminal, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, for the network-side device, the processor 1503 is further configured to: cancel transmission of the delay information report in response to determining that the terminal satisfies a second trigger condition, where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, for the network-side device, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, for the network-side device, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, for the network-side device, the remaining time information includes one or more of the following: a remaining time absolute value; or a remaining time urgency level value.

Optionally, for the network-side device, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, for the network-side device, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, for the network-side device, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, for the network-side device, the data group includes a packet data unit set (PDU set) or a data burst (data burst).

In FIG. 15, the bus architecture may include any number of interconnected buses and bridges, specifically one or more processors represented by processor 1503 and various circuits of memory represented by memory 1501 are linked together. The bus architecture may also link together various other circuits such as peripherals, voltage regulators, and power management circuits, which are well known in the art and are therefore not further described herein. The bus interface provides an interface. The transceiver 1502 may be a plurality of components, namely, a transmitter and a receiver, providing a unit for communicating with various other devices on a transmission medium. The transmission medium includes a wireless channel, a wired channel, an optical cable, and other transmission media. The processor 1503 is responsible for managing the bus architecture and general processing, and the memory 1501 may store data used by the processor 1503 when performing operations.

The processor 1503 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

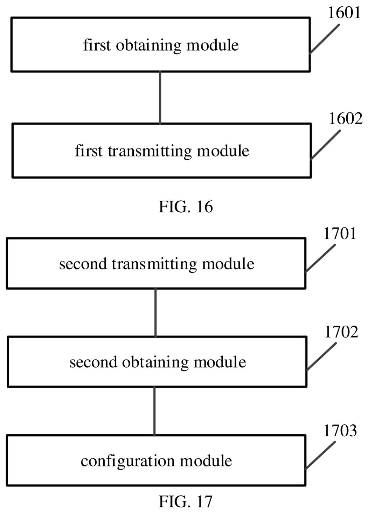

An embodiment of the present disclosure further provides a delay reporting apparatus, which is applied to a terminal. As shown in FIG. 16, the apparatus includes:
a first obtaining module 1601, configured to obtain configuration information transmitted by a network-side device, where the configuration information is used to configure a condition and/or a resource for the terminal to report a delay information report; and
a first transmitting module 1602, configured to transmit the delay information report of at least one data group to the network-side device according to the configuration information, where the delay information report includes remaining time information of the at least one data group relative to a reference time.

Optionally, for the delay reporting apparatus, the first transmitting module 1602 transmitting the delay information report of the at least one data group to the network-side device includes: transmitting the delay information report of the at least one data group to the network-side device through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the delay reporting apparatus, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the delay reporting apparatus, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the delay reporting apparatus, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the delay reporting apparatus, the first transmitting module 1602 transmitting the delay information report of the at least one data group to the network-side device includes: when a first trigger condition is satisfied, transmitting the delay information report of the at least one data group to the network-side device, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, for the delay reporting apparatus, the first transmitting module 1602 is further configured to: cancel transmission of the delay information report when a second trigger condition is satisfied, where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, for the delay reporting apparatus, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, for the delay reporting apparatus, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, for the delay reporting apparatus, the remaining time information includes one or more of the following: a remaining time absolute value; or a remaining time urgency level value.

Optionally, for the delay reporting apparatus, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, for the delay reporting apparatus, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, for the delay reporting apparatus, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, for the delay reporting apparatus, the data group includes a packet data unit set (PDU set) or a data burst (data burst).

An embodiment of the present disclosure further provides a delay reporting apparatus, which is applied to a network-side device. As shown in FIG. 17, the apparatus includes:
a second transmitting module 1701, configured to transmit configuration information to a terminal, where the configuration information is used to configure a condition and/or a resource for the terminal to report a delay information report; and
a second obtaining module 1702, configured to obtain the delay information report of at least one data group transmitted by the terminal according to the configuration information, where the delay information report includes remaining time information of the at least one data group relative to a reference time.

Optionally, the delay reporting apparatus further includes a configuration module 1703, configured to:
determine a delay range of a transmission resource configuration for the data group according to the reference time and the remaining time information; and
configure a transmission resource within the determined delay range.

Optionally, for the delay reporting apparatus, the second obtaining module 1702 obtaining the delay information report of the at least one data group transmitted by the terminal includes: obtaining the delay information report of the at least one data group transmitted by the terminal through one or more of the following signaling:
an uplink physical layer signaling included in a physical uplink shared channel (PUSCH) transmitted simultaneously with uplink data;
an uplink physical layer signaling included in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); where one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

Optionally, for the delay reporting apparatus, in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

Optionally, for the delay reporting apparatus, in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

Optionally, for the delay reporting apparatus, in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group including a target logical channel in the BSR, where the target logical channel group is a logical channel group pre-configured by the network-side device and permitted to transmit the delay information report, and the target logical channel is a logical channel pre-configured by the network-side device and permitted to transmit the delay information report.

Optionally, for the delay reporting apparatus, the second obtaining module obtaining 1702 obtaining the delay information report of the at least one data group transmitted by the terminal according to the configuration information includes:
when the terminal satisfies a first trigger condition, obtaining the delay information report of the at least one data group transmitted by the terminal, where the first trigger condition includes one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR including a buffer size (buffer size) of a designated logical channel or a designated DRB;
the terminal transmitting a BSR corresponding to a PDU set; or
buffered data of the terminal including a data group of a designated logical channel or a designated DRB, and a delay budget of the data group being less than a preset threshold.

Optionally, for the delay reporting apparatus, the second obtaining module 1702 is further configured to:
in response to determining that the terminal satisfies a second trigger condition, cancel transmission of the delay information report; where the second trigger condition includes one or more of the following:
the terminal having transmitted all data groups in a current transmission resource;
the terminal having completed transmission of one delay information report; or
current buffered data of the terminal not including data in the data group corresponding to the delay information report.

Optionally, for the delay reporting apparatus, the configuration information includes one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

Optionally, for the delay reporting apparatus, the delay information report further includes one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

Optionally, for the delay reporting apparatus, the remaining time information includes one or more of the following: a remaining time absolute value; or a remaining time urgency level value.

Optionally, for the delay reporting apparatus, the reference time includes one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

Optionally, for the delay reporting apparatus, the extended BSR MAC CE signaling used for simultaneously reporting the BSR and the delay information report includes one or more of the following:
second indication information used to indicate a logical channel group for transmitting the delay information report;
a buffer size of a logical channel group indicated by second indication information; or
remaining time information corresponding to a logical channel group indicated by second indication information,
where the second indication information includes an identifier and/or bitmap (bitmap) indication information of the logical channel group; and the remaining time information includes a remaining time absolute value and/or a remaining time urgency level value.

Optionally, for the delay reporting apparatus, the medium access control control element (MAC CE) signaling used for transmitting the delay information report includes one or more of the following:
third indication information used to indicate a logical channel or a logical channel group for transmitting the delay information report; or
remaining time information corresponding to a logical channel or a logical channel group indicated by third indication information,
where the remaining time information includes a remaining time absolute value and/or a remaining time urgency level value.

Optionally, for the delay reporting apparatus, the data group includes a packet data unit set (PDU set) or a data burst (data burst).

It should be noted that the above apparatus provided in the embodiment of the present disclosure can implement all method steps implemented in the above method embodiments at the network device side, and can achieve the same technical effects. Therefore, the part and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is used for causing the processor to execute the above information transmission method on the terminal side. Alternatively, the computer program is used for causing the processor to execute the above information transmission method on the network device side.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A delay reporting method, executed by a terminal, comprising:
obtaining configuration information transmitted by a network-side device, wherein the configuration information is used to configure a condition and/or a resource for the terminal to report a delay information report; and
transmitting the delay information report of at least one data group to the network-side device according to the configuration information, wherein the delay information report comprises remaining time information of the at least one data group relative to a reference time.

2. The delay reporting method according to claim 1, wherein the transmitting the delay information report of the at least one data group to the network-side device comprises: transmitting the delay information report of the at least one data group to the network-side device through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR (Buffer Status Report);
an uplink physical layer signaling transmitted on a specified uplink configured grant resource;
an uplink physical layer signaling transmitted on a physical uplink control channel (PUCCH); wherein one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

3. The delay reporting method according to claim 1 or 2, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

4. The delay reporting method according to claim 1 or 2, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

5. The delay reporting method according to claim 1 or 2, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

6. The delay reporting method according to claim 2, wherein the extended BSR MAC CE signaling used for simultaneously reporting the BSR and the delay information report comprises one or more of the following:
second indication information used to indicate a logical channel group for transmitting the delay information report;
a buffer size of a logical channel group indicated by second indication information; or
remaining time information corresponding to a logical channel group indicated by second indication information,
wherein the second indication information comprises an identifier and/or bitmap (bitmap) indication information of the logical channel group; and the remaining time information comprises a remaining time absolute value and/or a remaining time urgency level value.

7. The delay reporting method according to claim 2, wherein the medium access control control element (MAC CE) signaling used for transmitting the delay information report comprises one or more of the following:
third indication information used to indicate a logical channel or a logical channel group for transmitting the delay information report; or
remaining time information corresponding to a logical channel or a logical channel group indicated by third indication information,
wherein the remaining time information comprises a remaining time absolute value and/or a remaining time urgency level value.

8. The delay reporting method according to claim 1, wherein the transmitting the delay information report of the at least one data group to the network-side device comprises:
when a first trigger condition is satisfied, transmitting the delay information report of the at least one data group to the network-side device, wherein the first trigger condition comprises one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR comprising a buffer size (buffer size) of a designated logical channel or a designated DRB;
the terminal transmitting a BSR corresponding to a PDU set; or
buffered data of the terminal comprising a data group of a designated logical channel or a designated DRB, and a delay budget of the data group being less than a preset threshold.

9. The delay reporting method according to claim 1 or 8, further comprising:
when a second trigger condition is satisfied, cancelling transmission of the delay information report, wherein the second trigger condition comprises one or more of the following:
the terminal having transmitted all data groups in a current transmission resource;
the terminal having completed transmission of one delay information report; or
current buffered data of the terminal not comprising data in the data group corresponding to the delay information report.

10. The delay reporting method according to any one of claims 1 to 9, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

11. The delay reporting method according to any one of claims 1 to 10, wherein the delay information report further comprises one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

12. The delay reporting method according to any one of claims 1 to 11, wherein the remaining time information comprises one or more of the following:
a remaining time absolute value; or
a remaining time urgency level value.

13. The delay reporting method according to any one of claims 1 to 12, wherein the reference time comprises one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

14. The delay reporting method according to any one of claims 1 to 13, wherein the data group comprises a packet data unit set (PDU set) or a data burst (data burst).

15. A delay reporting method, executed by a network-side device, comprising:
transmitting configuration information to a terminal, wherein the configuration information is used to configure a condition and/or a resource for the terminal to report a delay information report; and
obtaining the delay information report of at least one data group transmitted by the terminal according to the configuration information, wherein the delay information report comprises remaining time information of the at least one data group relative to a reference time.

16. The delay reporting method according to claim 15, further comprising:
determining a delay range of a transmission resource configuration for the data group according to the reference time and the remaining time information; and
configuring a transmission resource within the determined delay range.

17. The delay reporting method according to claim 15, wherein the obtaining the delay information report of the at least one data group transmitted by the terminal comprises: obtaining the delay information report of the at least one data group transmitted by the terminal through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH), wherein one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

18. The delay reporting method according to any one of claims 15 to 17, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

19. The delay reporting method according to any one of claims 15 to 17, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

20. The delay reporting method according to any one of claims 15 to 17, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

21. The delay reporting method according to claim 17, wherein the extended BSR MAC CE signaling used for simultaneously reporting the BSR and the delay information report comprises one or more of the following:
second indication information used to indicate a logical channel group for transmitting the delay information report;
a buffer size of a logical channel group indicated by second indication information; or
remaining time information corresponding to a logical channel group indicated by second indication information,
wherein the second indication information comprises an identifier and/or bitmap (bitmap) indication information of the logical channel group; and the remaining time information comprises a remaining time absolute value and/or a remaining time urgency level value.

22. The delay reporting method according to claim 17, wherein the medium access control control element (MAC CE) signaling used for transmitting the delay information report comprises one or more of the following:
third indication information used to indicate a logical channel or a logical channel group for transmitting the delay information report; or
remaining time information corresponding to a logical channel or a logical channel group indicated by third indication information,
wherein the remaining time information comprises a remaining time absolute value and/or a remaining time urgency level value.

23. The delay reporting method according to claim 15, wherein the obtaining the delay information report of the at least one data group transmitted by the terminal according to the configuration information comprises:
when the terminal satisfies a first trigger condition, the obtaining the delay information report of the at least one data group transmitted by the terminal, wherein the first trigger condition comprises one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR comprising a buffer size (buffer size) of a designated logical channel or a designated DRB;
the terminal transmitting a BSR corresponding to a PDU set; or
buffered data of the terminal comprising a data group of a designated logical channel or a designated DRB, and a delay budget of the data group being less than a preset threshold.

24. The delay reporting method according to claim 15 or 23, further comprising:
in response to determining that the terminal satisfies a second trigger condition, cancelling transmission of the delay information report; wherein the second trigger condition comprises one or more of the following:
the terminal having transmitted all data groups in a current transmission resource;
the terminal having completed transmission of one delay information report; or
current buffered data of the terminal not comprising data in the data group corresponding to the delay information report.

25. The delay reporting method according to any one of claims 15 to 24, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

26. The delay reporting method according to any one of claims 15 to 25, wherein the delay information report further comprises one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

27. The delay reporting method according to any one of claims 15 to 26, wherein the remaining time information comprises one or more of the following:
a remaining time absolute value; or
a remaining time urgency level value.

28. The delay reporting method according to any one of claims 15 to 27, wherein the reference time comprises one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

29. The delay reporting method according to any one of claims 15 to 28, wherein the data group comprises a packet data unit set (PDU set) or a data burst (data burst).

30. A terminal, comprising a memory, a transceiver and a processor, wherein the memory is configured to store a computer program; the transceiver is configured to transmit and receive data under the control of the processor; and the processor configured to read the computer program in the memory and perform the following operations:
obtaining configuration information transmitted by a network-side device, wherein the configuration information is used to configure a condition and/or a resource for the terminal to report delay information; and
transmitting a delay information report of at least one data group to the network-side device according to the configuration information, wherein the delay information report comprises remaining time information of the at least one data group relative to a reference time.

31. The terminal according to claim 30, wherein the terminal transmitting the delay information report of the at least one data group to the network-side device comprises: transmitting the delay information report of the at least one data group to the network-side device through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); wherein one or more of a pre-configured logical channel, a logical channel group and an identifier of the data group correspond to the delay information report;
an extended BSR medium access control control element (MAC CE) signaling used for simultaneously reporting a BSR and the delay information report; or
a medium access control control element (MAC CE) signaling used for transmitting the delay information report.

32. The terminal according to claim 30 or 31, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

33. The terminal according to claim 30 or 31, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

34. The terminal according to claim 30 or 31, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

35. The terminal according to claim 30, wherein the transmitting, by the processor, the delay information report of the at least one data group to the network-side device comprises:
when a first trigger condition is satisfied, transmitting the delay information report of the at least one data group to the network-side device, wherein the first trigger condition comprises one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR comprising a buffer size (buffer size) of a designated logical channel or a designated DRB;
the terminal transmitting a BSR corresponding to a PDU set; or
buffered data of the terminal comprising a data group of a designated logical channel or a designated DRB, and a delay budget of the data group being less than a preset threshold.

36. The terminal according to claim 30 or 35, wherein the processor is further configured to:
when a second trigger condition is satisfied, cancel transmission of the delay information report, wherein the second trigger condition comprises one or more of the following:
the terminal having transmitted all data groups in a current transmission resource;
the terminal having completed transmission of one delay information report; or
current buffered data of the terminal not comprising data in the data group corresponding to the delay information report.

37. The terminal according to any one of claims 30 to 36, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

38. A network-side device, comprising a memory, a transceiver and a processor, wherein the memory is configured to store a computer program; the transceiver is configured to transmit and receive data under the control of the processor; and the processor configured to read the computer program in the memory and perform the following operations:
transmitting configuration information to a terminal, wherein the configuration information is used to configure a condition and/or a resource for the terminal to report a delay information report; and
obtaining the delay information report of at least one data group transmitted by the terminal according to the configuration information, wherein the delay information report comprises remaining time information of the at least one data group relative to a reference time.

39. The network-side device according to claim 38, wherein the processor is further configured to:
determine a delay range of a transmission resource configuration for the data group according to the reference time and the remaining time information; and
configure a transmission resource within the determined delay range.

40. The network-side device according to claim 38, wherein the obtaining, by the processor, the delay information report of the at least one data group transmitted by the terminal comprises: obtaining the delay information report of the at least one data group transmitted by the terminal through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); wherein one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

41. The network-side device according to any one of claims 38 to 40, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

42. The network-side device according to any one of claims 38 to 40, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

43. The network-side device according to any one of claims 38 to 40, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

44. The network-side device according to any one of claims 38 to 40, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

45. A delay reporting apparatus, applied to a terminal, comprising:
a first obtaining module, configured to obtain configuration information transmitted by a network-side device, wherein the configuration information is used to configure a condition and/or a resource for the terminal to report a delay information report; and
a first transmitting module, configured to transmit the delay information report of at least one data group to the network-side device according to the configuration information, wherein the delay information report comprises remaining time information of the at least one data group relative to a reference time.

46. The apparatus according to claim 45, wherein the first transmitting module transmitting the delay information report of the at least one data group to the network-side device comprises: transmitting the delay information report of the at least one data group to the network-side device through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); wherein one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

47. The apparatus according to claim 45 or 46, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

48. The apparatus according to claim 45 or 46, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

49. The apparatus according to claim 45 or 46, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

50. The apparatus according to claim 45, wherein the first transmitting module transmitting the delay information report of the at least one data group to the network-side device comprises:
when a first trigger condition is satisfied, transmitting the delay information report of the at least one data group to the network-side device, wherein the first trigger condition comprises one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR comprising a buffer size (buffer size) of a designated logical channel or a designated DRB;
the terminal transmitting a BSR corresponding to a PDU set; or
buffered data of the terminal comprising a data group of a designated logical channel or a designated DRB, and a delay budget of the data group being less than a preset threshold.

51. The apparatus according to claim 45 or 50, wherein the first transmitting module 1602 is further configured to:
when a second trigger condition is satisfied, cancel transmission of the delay information report, wherein the second trigger condition comprises one or more of the following:
the terminal having transmitted all data groups in a current transmission resource;
the terminal having completed transmission of one delay information report; or
current buffered data of the terminal not comprising data in the data group corresponding to the delay information report.

52. The apparatus according to any one of claims 45 to 51, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

53. The apparatus according to any one of claims 45 to 52, wherein the delay information report further comprises one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

54. The apparatus according to any one of claims 45 to 53, wherein the remaining time information comprises one or more of the following:
a remaining time absolute value; or
a remaining time urgency level value.

55. The apparatus according to any one of claims 45 to 54, wherein the reference time comprises one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

56. The apparatus according to claim 46, wherein the extended BSR MAC CE signaling used for simultaneously reporting the BSR and the delay information report comprises one or more of the following:
second indication information used to indicate a logical channel group for transmitting the delay information report;
a buffer size of a logical channel group indicated by second indication information; or
remaining time information corresponding to a logical channel group indicated by second indication information,
wherein the second indication information comprises an identifier and/or bitmap (bitmap) indication information of the logical channel group; and the remaining time information comprises a remaining time absolute value and/or a remaining time urgency level value.

57. The apparatus according to claim 46, wherein the medium access control control element (MAC CE) signaling used for transmitting the delay information report comprises one or more of the following:
third indication information used to indicate a logical channel or a logical channel group for transmitting the delay information report; or
remaining time information corresponding to a logical channel or a logical channel group indicated by third indication information,
wherein the remaining time information comprises a remaining time absolute value and/or a remaining time urgency level value.

58. The apparatus according to any one of claims 45 to 57, wherein the data group comprises a packet data unit set (PDU set) or a data burst (data burst).

59. A delay reporting apparatus, applied to a network-side device, comprising:
a second transmitting module, configured to transmit configuration information to a terminal, wherein the configuration information is used to configure a condition and/or a resource for the terminal to report a delay information report; and
a second obtaining module, configured to obtain the delay information report of at least one data group transmitted by the terminal according to the configuration information, wherein the delay information report comprises remaining time information of the at least one data group relative to a reference time.

60. The apparatus according to claim 59, further comprising a configuration module, configured to:
determine a delay range of a transmission resource configuration for the data group according to the reference time and the remaining time information; and
configure a transmission resource within the determined delay range.

61. The apparatus according to claim 59, wherein the second obtaining module obtaining the delay information report of the at least one data group transmitted by the terminal comprises: obtaining the delay information report of the at least one data group transmitted by the terminal through one or more of the following signaling:
an uplink physical layer signaling comprised in a physical uplink shared channel (PUSCH) transmitted simultaneously with uplink data;
an uplink physical layer signaling comprised in a physical uplink shared channel (PUSCH) transmitted simultaneously with a BSR;
an uplink physical layer signaling transmitted on a specified uplink configured grant resource;
an uplink physical layer signaling transmitted on a physical uplink control channel (PUCCH); wherein one or more identifier of a pre-configured logical channel, a logical channel group, or the data group correspond to the delay information report;
an extended BSR medium access control control element (MAC CE) signaling used for simultaneously reporting a BSR and the delay information report; or
a medium access control control element (MAC CE) signaling used for transmitting the delay information report.

62. The apparatus according to any one of claims 59 to 61, wherein in a case that the delay information report and uplink data are transmitted simultaneously, the data group is any one of the following:
a data group in a logical channel having a highest logical channel priority in the uplink data; or
a data group in a logical channel in the uplink data configured by the network-side device and permitted to transmit the delay information report.

63. The apparatus according to any one of claims 59 to 61, wherein in a case that the delay information report is transmitted through an uplink configured grant resource, the data group is any one of the following:
a data group in a logical channel configured by the network-side device and permitted to use the configured grant resource;
a data group in a logical channel having a highest priority among logical channels configured by the network-side device and permitted to use the configured grant resource; or
a data group in a logical channel configured by the network-side device and permitted to transmit the delay information report on the configured grant resource.

64. The apparatus according to any one of claims 59 to 61, wherein in a case that the delay information report and a BSR are transmitted simultaneously, the data group is any one of the following:
a data group of a logical channel in a logical channel group (LCG) having a highest priority in the BSR; or
a data group in a target logical channel group and/or a logical channel group comprising a target logical channel in the BSR, wherein the target logical channel group is a logical channel group pre-configured by the network-side device and permitted to transmit the delay information report, and the target logical channel is a logical channel pre-configured by the network-side device and permitted to transmit the delay information report.

65. The apparatus according to claim 59, wherein the second obtaining module obtaining the delay information report of the at least one data group transmitted by the terminal according to the configuration information comprises:
when the terminal satisfies a first trigger condition, the obtaining the delay information report of the at least one data group transmitted by the terminal, wherein the first trigger condition comprises one or more of the following:
buffered data of a designated logical channel or a designated data radio bearer (DRB) arriving at a terminal buffer;
the terminal transmitting a first data packet in a data group of a designated logical channel or a designated DRB;
the terminal transmitting a BSR comprising a buffer size (buffer size) of a designated logical channel or a designated DRB;
the terminal transmitting a BSR corresponding to a PDU set; or
buffered data of the terminal comprising a data group of a designated logical channel or a designated DRB, and a delay budget of the data group being less than a preset threshold.

66. The apparatus according to claim 59 or 65, wherein the second obtaining module is further configured to:
in response to determining that the terminal satisfies a second trigger condition, cancel transmission of the delay information report; wherein the second trigger condition comprises one or more of the following:
the terminal having transmitted all data groups in a current transmission resource;
the terminal having completed transmission of one delay information report; or
current buffered data of the terminal not comprising data in the data group corresponding to the delay information report.

67. The apparatus according to any one of claims 59 to 66, wherein the configuration information comprises one or more of the following:
one or more of an identifier of a data radio bearer (DRB), an identifier of a radio link control (RLC) and an identifier of a logical channel (LCH) configured by the network-side device for permitting transmission of the delay information report;
the reference time;
an index of a configured grant (CG) resource for transmitting the delay information report;
a first trigger condition used for triggering transmission of the delay information report; or
a second trigger condition used for canceling transmission of the delay information report.

68. The apparatus according to any one of claims 59 to 67, wherein the delay information report further comprises one or more of the following:
an identifier of the at least one data group;
an identifier of a logical channel or a logical channel group corresponding to the delay information report;
first indication information used for indicating that the delay information report corresponds to uplink data transmitted simultaneously or corresponds to a buffer status report (BSR) transmitted simultaneously.

69. The apparatus according to any one of claims 59 to 68, wherein the remaining time information comprises one or more of the following:
a remaining time absolute value; or
a remaining time urgency level value.

70. The apparatus according to any one of claims 59 to 69, wherein the reference time comprises one or more of the following:
a time corresponding to a starting position of a transmission resource for transmitting the delay information report;
a time corresponding to an ending position of a transmission resource for transmitting the delay information report;
a time corresponding to a starting position of a frame where the delay information is located;
a time corresponding to an ending position of a frame where the delay information report is located;
a time corresponding to a starting position of a frame closest to a frame where the delay information report is located;
a time corresponding to an ending position of a frame closest to a frame where the delay information report is located;
a time corresponding to a starting position of a transmission resource where a scheduling command for scheduling an uplink resource of the delay information report is located; or
a time corresponding to an ending position of a transmission resource where a scheduling command for scheduling an uplink resource of the delay information report is located.

71. The apparatus according to claim 61, wherein the extended BSR MAC CE signaling used for simultaneously reporting the BSR and the delay information report comprises one or more of the following:
second indication information used to indicate a logical channel group for transmitting the delay information report;
a buffer size of a logical channel group indicated by second indication information; or
remaining time information corresponding to a logical channel group indicated by second indication information,
wherein the second indication information comprises an identifier and/or bitmap (bitmap) indication information of the logical channel group; and the remaining time information comprises a remaining time absolute value and/or a remaining time urgency level value.

72. The apparatus according to claim 61, wherein the medium access control control element (MAC CE) signaling used for transmitting the delay information report comprises one or more of the following:
third indication information used to indicate a logical channel or a logical channel group for transmitting the delay information report; or
remaining time information corresponding to a logical channel or a logical channel group indicated by third indication information,
wherein the remaining time information comprises a remaining time absolute value and/or a remaining time urgency level value.

73. The apparatus according to any one of claims 59 to 72, wherein the data group comprises a packet data unit set (PDU set) or a data burst (data burst).

74. A processor-readable storage medium, wherein the processor-readable storage medium stores a computer program, and the computer program is configured to cause the processor to execute steps of the delay reporting method according to any one of claims 1 to 14, or to execute steps of the delay reporting method according to any one of claims 15 to 29.
